(19) **Europäisches Patentamt / European Patent Office / Office européen des brevets**

(11) **EP 4 596 168 A1**

(12) **EUROPEAN PATENT APPLICATION**
published in accordance with Art. 153(4) EPC

(43) Date of publication:
**06.08.2025 Bulletin 2025/32**

(21) Application number: **22961045.6**

(22) Date of filing: **30.09.2022**

(51) International Patent Classification (IPC):
***B23K 35/30*** *(2006.01)*

(52) Cooperative Patent Classification (CPC):
**B23K 35/30**

(86) International application number:
**PCT/JP2022/036866**

(87) International publication number:
**WO 2024/069986 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
• **MATSUO, Hajime**
 **Tokyo 100-8071 (JP)**
• **KAMO, Takahiro**
 **Tokyo 100-8071 (JP)**
• **TACHIBANA, Hayato**
 **Tokyo 100-8071 (JP)**

(74) Representative: **Vossius & Partner**
**Patentanwälte Rechtsanwälte mbB**
**Siebertstrasse 3**
**81675 München (DE)**

(54) **WELD METAL, WELD JOINT, AND WELD STRUCTURE**

(57) A weld metal including C: 0.030% to 1.000%, Si: from 0.03% to 0.50%, Mn: 4.1% to 30.0%, P: 0% to 0.050%, S: 0% to 0.050%, Cu: 0% to 5.0%, Ni: 1.0% to 30.0%, Cr: 0% to 20.0%, Mo: 0% to 10.0%, Nb: 0% to 1.000%, V: 0% to 1.00%, Co: 0% to 1.00%, Pb: 0% to 1.00%, Sn: 0% to 1.00%, W: 0% to 20.0%, Mg: 0% to 5.0%, Al: 0% to 0.100%, Ca: 0% to 5.0%, Ti: 0% to 0.100%, B: 0% to 0.5000%, REM: 0% to 0.500%, Zr: 0% to 0.500%, N: 0% to 0.5000%, O: 0.0010% to 0.1500%, and balance: Fe and impurities, wherein, Mn + Ni: 5.0% or more, and Nb + Ti + V + Al: 0.005% or more.

EP 4 596 168 A1

EP 4 596 168 A1

## Description

Technical Field

The present disclosure relates to a weld metal, a weld joint, and a weld structural object.

Background Art

In recent years, with the tightening of carbon dioxide emission regulations due to the problem of global warming, demand for hydrogen fuel that emits no carbon dioxide, natural gas that emits less carbon dioxide, and the like as compared with petroleum, coal, and the like has increased. Along with this, demand for construction of liquid hydrogen tanks, liquid carbon dioxide tanks, LNG tanks, and the like used in ships, the ground, and the like has also increased worldwide. For a steel material used for the liquid hydrogen tanks, the liquid carbon dioxide tanks, the LNG tanks, and the like, Ni-based low temperature steels containing from 6% to 9% Ni are used in order to secure toughness at an extremely low temperature of - 196°C.

In welding of these Ni-based low temperature steels, a weld metal is formed by performing welding using an austenitic weld material from which a weld metal having high toughness in low-temperature is obtained. The weld material is mainly designed with a Ni content of 70%.

For example, as a weld material with the Ni content of 70%, Patent Literature 1 discloses "A flux-cored wire with a Ni-based alloy as an outer sheath, the Ni content being from 35% to 70%, the flux containing $TiO_2$, $SiO_2$, and $ZrO_2$ in a total amount of 4.0% by mass or more and further containing a Mn oxide in an amount of from 0.6% to 1.2% by mass in terms of $MnO_2$, with respect to the total mass of the wire, and when the contents of $TiO_2$, $SiO_2$, $ZrO_2$, and $MnO_2$ (converted amount) are represented by $[TiO_2]$, $[SiO_2]$, $[ZrO_2]$, and $[MnO_2]$, respectively, by % by mass, $[TiO_2]/[ZrO_2]$ being from 2.3 to 3.3, $[SiO_2]/[ZrO_2]$ being from 0.9 to 1.5, and $([TiO_2] + [SiO_2] + [ZrO_2])/[MnO_2]$ being from 5 to 13".

Patent Literature 1: Japanese Patent Application Laid-Open (JP-A) No. 2008-246507

SUMMARY OF INVENTION

Technical Problem

However, when a large amount of Ni is contained in the weld metal in order to secure the toughness in low-temperature of the weld metal (for example, when a weld material designed with the Ni content of 70% is used), the weld metal becomes very expensive, and thus an inexpensive weld metal is required.

Although expensive Ni is known as an element that stabilizes the austenite phase, inexpensive Mn has a similar effect. Therefore, when the Ni content is reduced and the Mn content is increased, a weld metal that is inexpensive and has high toughness in low-temperature is obtained. However, only by increasing Mn, the toughness is deteriorated, and mechanical properties cannot be secured.

Therefore, an object of the present invention is to provide a weld metal that is inexpensive and has high toughness in low-temperature, a weld joint including the weld metal, and a weld structural object including the weld joint.

Solution to Problem

Solution to Problem includes the following aspects.

<1> A weld metal having a chemical component consisting of, in % by mass with respect to a total mass of the weld metal,

C: from 0.030% to 1.000%,
Si: from 0.03% to 0.50%,
Mn: from 4.1% to 30.0%,
P: from 0% to 0.050%,
S: from 0% to 0.050%,
Cu: from 0% to 5.0%,
Ni: from 1.0% to 30.0%,
Cr: from 0% to 20.0%,
Mo: from 0% to 10.0%,
Nb: from 0% to 1.000%,
V: from 0% to 1.00%,

Co: from 0% to 1.00%,
Pb: from 0% to 1.00%,
Sn: from 0% to 1.00%,
W: from 0% to 20.0%,
Mg: from 0% to 5.0%,
Al: from 0% to 0.100%,
Ca: from 0% to 5.0%,
Ti: from 0% to 0.100%,
B: from 0% to 0.5000%,
REM: from 0% to 0.500%,
Zr: from 0% to 0.500%,
N: from 0% to 0.5000%,
O: from 0.0010% to 0.1500%, and
balance: Fe and impurities,
wherein:

a total (Mn + Ni) of a content of the Mn and a content of the Ni is 5.0% or more, and
a total (Nb + Ti + V + Al) of a content of the Nb, a content of the Ti, a content of the V, and a content of the Al is 0.005% or more.

<2> The weld metal according to <1>, wherein a total (Mn + Ni + Cr) of the content of the Mn, the content of the Ni, and a content of the Cr is 15.0% or more.

<3> The weld metal according to <1> or <2>, wherein an fcc ratio obtained by a magnetic induction method is 70% or more.

<4> The weld metal according to any one of <1> to <3>, wherein a mass ratio (Ni/Mn) of the content of the Mn and the content of the Ni is 0.10 or more.

<5> The weld metal according to <4>, wherein the mass ratio (Ni/Mn) is 1.00 or more.

<6> The weld metal according to any one of <1> to <5>, wherein the content of the Ti is Ti: from 0.003% to 0.100%.

<7> The weld metal according to any one of <1> to <6>, wherein a content of the C is C: from 0.110% to 1.000%.

<8> A weld joint comprising the weld metal according to any one of <1> to <7>.

<9> A weld structural object comprising the weld joint according to <8>.

Advantageous Effects of Invention

According to the disclosure, a weld metal that is inexpensive and has high toughness in low-temperature, a weld joint including the weld metal, and a weld structural object including the weld joint can be provided.

DESCRIPTION OF EMBODIMENTS

Embodiments that is an example of the disclosure will be described.

In the present specification, a numerical range represented by "to" means a range including numerical values described before and after "to" as a lower limit value and an upper limit value when "greater than" and "less than" are not added to these numerical values. In addition, a numerical range when "greater than" or "less than" is attached to the numerical values described before and after "to" means a range not including these numerical values as the lower limit value or the upper limit value.

In numerical ranges described stepwise in the present specification, an upper limit value of a certain stepwise numerical range may be replaced with an upper limit value of a numerical range of another stepwise description, or may be replaced with a value shown in the examples. Further, a lower limit value of a certain stepwise numerical range may be replaced with a lower limit value of a numerical range of another stepwise description, or may be replaced with a value shown in the examples.

As for the content, "%" means "% by mass".

"0 to" as the content (%) means that the component is an optional component and need not be contained.

<Weld Metal>

In the weld metal according to the disclosure, the chemical component has a predetermined composition.

In the weld metal according to the disclosure, a weld metal that is inexpensive and has high toughness in low-temperature is obtained with the above configuration.

The weld metal according to the disclosure has been found from the following findings.

The inventors have studied a technique for obtaining a weld metal that can improve the toughness in low-temperature of the weld metal even when the Ni content is reduced and the Mn content is increased. As a result, the following findings were obtained.

In order to secure the toughness in low-temperature, it is preferable that the weld metal is an austenite single phase. Both Ni and Mn stabilize the austenite phase. However, when Ni is excessively reduced or Mn is excessively increased, stacking fault energy was lowered and the toughness was deteriorated. Therefore, by controlling the contents of Ni and Mn, the stacking fault energy was prevented from being lowered. As a result, the weld metal having high toughness in low-temperature was obtained even when the Ni content was reduced and the Mn content was increased in the entire weld metal.

From the above findings, it has been found that the weld metal according to the disclosure is inexpensive and has high toughness in low-temperature.

Hereinafter, the reasons for limiting the requirements (requirements including optional requirements) constituting the weld metal according to the disclosure will be specifically described.

(Chemical Component of Weld Metal)

Hereinafter, the chemical component of the weld metal will be described in detail.

In the description of the chemical component of the weld metal, "%" means "% by mass with respect to the total mass of the weld metal" unless otherwise specified.

The chemical component of the weld metal consists of

C: from 0.030% to 1.000%,
Si: from 0.03% to 0.50%,
Mn: from 4.1% to 30.0%,
P: from 0% to 0.050%,
S: from 0% to 0.050%,
Cu: from 0% to 5.0%,
Ni: from 1.0% to 30.0%,
Cr: from 0% to 20.0%,
Mo: from 0% to 10.0%,
Nb: from 0% to 1.000%,
V: from 0% to 1.00%,
Co: from 0% to 1.00%,
Pb: from 0% to 1.00%,
Sn: from 0% to 1.00%,
W: from 0% to 20.0%,
Mg: from 0% to 5.0%,
Al: from 0% to 0.100%,
Ca: from 0% to 5.0%,
Ti: from 0% to 0.100%,
B: from 0% to 0.5000%,
REM: 0% to 0.500%,
Zr: 0% to 0.500%,
N: 0% to 0.5000%,
O: from 0.0010% to 0.1500%, and
balance: Fe and impurities.

In the chemical component,

a total (Mn + Ni) of a content of the Mn and a content of the Ni is 5.0% or more, and
a total (Nb + Ti + V + Al) of a content of the Nb, a content of the Ti, a content of the V, and a content of the Al is 0.005% or more.

(C :from 0.030% to 1.000%)

C improves strength of the weld metal, and is an element for securing the strength of the weld metal.

However, when the C content in the weld metal is excessive, the influence of deterioration of the toughness due to an increase in the strength of the weld metal is large, and the toughness in low-temperature of the weld metal decreases.

Therefore, the C content in the weld metal is set from 0.030% to 1.000%.

A lower limit of the C content in the weld metal may be preferably set to 0.050%, 0.100%, 0.110%, 0.120%, 0.140%, 0.150%, 0.200%, or 0.250%.

An upper limit of the C content in the weld metal is preferably 0.900%, 0.800%, 0.700%, 0.600%, 0.550%, 0.500%, 0.450%, or 0.400%.

(Si: from 0.03% to 0.50%)

Si is a deoxidizing element. When the Si content in the weld metal is too low, the P content in the weld metal increases.

However, Si has a low solid solubility with respect to the austenite phase, and as Si is contained in a larger amount, an embrittlement phase such as an intermetallic compound or $\delta$ ferrite is generated at a high temperature, and high temperature ductility is deteriorated.

Therefore, the Si content in the weld metal is set from 0.03% to 0.50%.

A lower limit of the Si content in the weld metal is preferably 0.04%, 0.05% or 0.08%.

An upper limit of the Si content in the weld metal is preferably 0.48%, 0.45%, 0.40%, 0.35%, 0.30%, or 0.20%.

(Mn: from 4.1% to 30.0%)

Mn stabilizes the austenite phase. When the Mn content in the weld metal is too low, austenitization of the weld metal hardly proceeds, and the toughness in low-temperature is deteriorated. Mn functions as a deoxidizing agent to improve the cleanness of the weld metal. Mn detoxifies S in the weld metal by forming MnS. It improve the toughness of the weld metal in low-temperature. In addition, Mn has an effect of preventing hot cracking.

However, when the Mn content in the weld metal is excessive, micro-segregation is likely to occur in the weld metal, and significant embrittlement occurs at the segregated portion. In addition, when Mn is excessively added, the stacking fault energy decreases and the toughness deteriorates.

Therefore, the Mn content in the weld metal is set from 4.1% to 30.0%.

A lower limit of the Mn content in the weld metal is preferably 4.2%, 4.5%, 5.0%, 7.0%, 9.0% or 10.0%.

An upper limit of the Mn content in the weld metal is preferably 28.0%, 25.0%, 23.0%, 20.0%, 18.0%, 15.0% or 14.5%.

(P: from 0% to 0.050%)

P is an impurity element and reduces the toughness, and thus it is preferable to reduce the P content in the weld metal as much as possible. Therefore, a lower limit of the P content in the weld metal is set to 0%. However, from the viewpoint of reducing the P removal cost, the P content in the weld metal is preferably 0.003% or more.

When the P content in the weld metal is 0.050% or less, the adverse effect of P on the toughness falls within an acceptable range.

Therefore, the P content in the weld metal is set from 0% to 0.050%.

In order to effectively suppress the decrease in the toughness, the P content in the weld metal is preferably 0.040% or less, 0.030% or less, 0.020% or less, 0.015% or less, or 0.010% or less.

(S: from 0% to 0.050%)

S is an impurity element and reduces the toughness, and thus it is preferable to reduce the S content in the weld metal as much as possible. Therefore, a lower limit of the S content in the weld metal is set to 0%. However, from the viewpoint of reducing the S removal cost, the S content in the weld metal is preferably 0.003% or more.

When the S content in the weld metal is 0.050% or less, the adverse effect of S on the toughness falls within an acceptable range.

Therefore, the S content in the weld metal is set from 0% to 0.050%.

In order to effectively suppress the decrease in the toughness, the S content in the weld metal is preferably 0.040% or less, 0.030% or less, 0.020% or less, 0.015% or less, or 0.010% or less.

(Cu: from 0% to 5.0%)

Cu is a precipitation strengthening element, and may be contained in the weld metal in order to improve the strength of the weld metal. Cu stabilizes the austenite phase. Cu may be contained in the weld metal in order to improve the toughness in low-temperature of the weld metal.

However, when the Cu content in the weld metal is excessive, the above effect is saturated.

Therefore, the Cu content in the weld metal is set from 0% to 5.0%.

A lower limit of the Cu content in the weld metal is preferably 0.3%, 0.5%, or 0.7%.

An upper limit of the Cu content in the weld metal is preferably 4.5%, 4.0%, or 3.5%.

(Ni: from 1.0% to 30.0%)

Ni stabilizes the austenite phase. When the Ni content in the weld metal is too low, the toughness is deteriorated by not stabilizing the austenite phase in the weld metals.

However, when the Ni content in the weld metal is increased, the cost of the weld metal increases.

Therefore, the Ni content in the weld metal is set from 1.0% to 30.0%.

A lower limit of the Ni content in the weld metal is preferably 2.0%, 3.0%, 3.2%, 3.7%, 5.0%, or 7.0%.

An upper limit of the Ni content in the weld metal is preferably 28.0%, 25.0%, 23.0%, 20.0%, 18.0%, or 15.0%.

(Cr: from 0% to 20.0%)

Cr stabilizes the austenite phase, and may be contained in the weld metal in order to improve the toughness in low-temperature of the weld metal.

However, when the Cr content in the weld metal is excessive, an amount of a low-melting-point compound in a molten metal increases, and a solid-liquid coexisting temperature range of the molten metal is widened, and thus the hot cracking is likely to occur.

Therefore, the Cr content in the weld metal is set from 0% to 20.0%.

A lower limit of the Cr content in the weld metal is preferably 1.0%, 2.0% or 3.0%.

An upper limit of the Cr content in the weld metal is preferably 18.0%, 15.8%, 15.3%, 15.0%, 13.3%, 13.0%, 10.0%, 9.0%, 8.0% or 7.0%.

(Mo: from 0% to 10.0%)

Mo is a precipitation strengthening element, and may be contained in the weld metal in order to improve the strength of the weld metal.

However, when the Mo content in the weld metal is excessive, the strength of the weld metal is excessive, and the toughness in low-temperature decreases.

Therefore, the Mo content in the weld metal is set from 0% to 10.0%.

A lower limit of the Mo content in the weld metal is preferably 1.0%, 2.0% or 3.0%.

An upper limit of the Mo content in the weld metal is preferably 9.0%, 8.0%, or 7.0%.

(Nb: from 0% to 1.000%)

Nb forms a carbide in the weld metal and increases the strength of the weld metal, and thus may be contained in the weld metal.

However, when the Nb content in the weld metal is excessive, there is a concern that the hot cracking of the weld metal may occur.

Therefore, the Nb content in the weld metal is set from 0% to 1.000%.

A lower limit of the Nb content in the weld metal is preferably 0.010%, 0.050%, 0.100%, 0.150%, or 0.200%.

An upper limit of the Nb content in the weld metal is preferably 0.950%, 0.900%, 0.850%, or 0.800%.

(V: from 0% to 1.00%)

V forms a carbonitride in the weld metal and increases the strength of the weld metal, and thus may be contained in the weld metal.

However, when the V content in the weld metal is excessive, the hot cracking of the weld metal may occur.

Therefore, the V content in the weld metal is set from 0% to 1.00%.

A lower limit of the V content in the weld metal is preferably 0.01%, 0.05%, 0.10%, 0.15%, or 0.20%.

An upper limit of the V content in the weld metal is preferably 0.95%, 0.90%, 0.85%, or 0.80%.

(Co: from 0% to 1.00%)

Co increases the strength of the weld metal by solid solution strengthening, and thus may be contained in the weld metal.

However, when the Co content in the weld metal is excessive, ductility of the weld metal decreases, and the toughness cannot be secured.

Therefore, the Co content in the weld metal is set from 0% to 1.00%.

A lower limit of the Co content in the weld metal is preferably 0.01%, 0.05%, 0.10%, 0.15%, or 0.20%.

An upper limit of the Co content in the weld metal is preferably 0.95%, 0.90%, 0.85%, or 0.80%.

(Pb: from 0% to 1.00%)

Pb improves toe formability between a steel material that is a base material and the weld metal and improving a cutting property of the weld metal. Therefore Pb may be contained in the weld metal.

However, when the Pb content in the weld metal is excessive, the hot cracking occurs.

Therefore, the Pb content in the weld metal is set from 0% to 1.00%.

A lower limit of the Pb content in the weld metal is preferably 0.01%, 0.05%, 0.10%, 0.15%, or 0.20%.

An upper limit of the Pb content in the weld metal is preferably 0.95%, 0.90%, 0.85%, or 0.80%.

(Sn: from 0% to 1.00%)

Sn improves corrosion resistance of the weld metal, and thus may be contained in the weld metal.

However, when the Sn content in the weld metal is excessive, there is a concern that cracking may occur in the weld metal.

Therefore, the Sn content in the weld metal is set from 0% to 1.00%.

A lower limit of the Sn content in the weld metal is preferably 0.01%, 0.05%, 0.10%, 0.15%, or 0.20%.

An upper limit of the Sn content in the weld metal is preferably 0.95%, 0.90%, 0.85%, or 0.80%.

(W: from 0% to 20.0%)

W is a solid solution strengthening element, and may be contained in the weld metal in order to improve the strength.

However, when the W content in the weld metal is excessive, the strength of the weld metal is excessive, and the toughness may be reduced.

Therefore, the W content in the weld metal is set from 0% to 20.0%.

A lower limit of the W content in the weld metal is preferably 0.5%, 1.0%, or 2.0%.

An upper limit of the W content in the weld metal is preferably 19.0%, 18.0%, 17.0%, 16.0%, or 15.0%.

(Mg: from 0% to 5.0%)

Mg is a deoxidizing element, and has an effect of reducing oxygen and improving the toughness, and thus may be contained in the weld metal.

However, when the Mg content in the weld metal is excessive, an arc is destabilized during a welding work for obtaining the weld metal, sputtering and blow holes increase, and the welding workability is deteriorated.

Therefore, the Mg content in the weld metal is set from 0% to 5.0%.

A lower limit of the Mg content in the weld metal is preferably 0.02%, 0.05%, 0.1%, or 0.2%.

An upper limit of the Mg content in the weld metal is preferably 4.8%, 4.5%, 4.3%, or 4.0%.

(Al: from 0% to 0.100%)

Al is a deoxidizing element, and may be contained in the weld metal in order to suppress welding defects and improve the cleanness of the weld metal..

However, when the Al content in the weld metal is excessive, Al may form a nitride or an oxide in the weld metal, and the toughness in low-temperature of the weld metal may be reduced.

Therefore, the Al content in the weld metal is set from 0% to 0.100%.

A lower limit of the Al content in the weld metal is preferably 0.010%, 0.020%, or 0.030%.

An upper limit of the Al content in the weld metal is preferably 0.090%, 0.080%, or 0.070%.

(Ca: from 0% to 5.0%)

Ca has a function of changing the structure of a sulfide and refining the sizes of the sulfide and an oxide in the weld metal, and thus is effective for improving the ductility and the toughness of the weld metal. Therefore, Ca may be contained in the weld metal.

However, when the content in Ca in the weld metal is excessive, coarsening of the sulfide and the oxide may occur, leading to deterioration of the toughness in low-temperature of the weld metal.

Therefore, the Ca content in the weld metal is set from 0% to 5.0%.

A lower limit of the Ca content in the weld metal is preferably 0.01%, 0.02%, or 0.03%.

An upper limit of the Ca content in the weld metal is preferably 4.8%, 4.5%, 4.3%, or 4.0%.

(Ti: from 0% to 0.100%)

Ti is a deoxidizing element, and may be contained in the weld metal in order to suppress welding defects and improve the cleanness of the weld metal.

However, when the Ti content in the weld metal is excessive, carbide is generated in the weld metal, and the toughness of the weld metal may be deteriorated.

Therefore, the Ti content in the weld metal is set from 0% to 0.100%.

A lower limit of the Ti content in the weld metal is preferably 0.003%, 0.010%, 0.020%, or 0.030%.

An upper limit of the Ti content in the weld metal is preferably 0.090%, 0.080%, or 0.070%.

(B: from 0% to 0.5000%)

B stabilizes the austenite phase. B is also an interstitial solid solution strengthening element, and may be contained in the weld metal in order to improve the toughness in low-temperature and the strength of the weld metal.

However, when the B content in the weld metal is excessive, $M_{23}(C, B)_6$ is precipitated, which causes toughness deterioration.

Therefore, the B content in the weld metal is set from 0% to 0.5000%.

A lower limit of the B content in the weld metal is preferably 0.0005%, 0.0010%, or 0.0020%.

An upper limit of the B content in the weld metal is preferably 0.4800%, 0.4500%, 0.4300%, or 0.4000%.

(REM: from 0% to 0.500%)

REM stabilizes an arc during the welding for obtaining the weld metal, and thus may be contained in the weld metal.

However, when the REM content in the weld metal is excessive, sputtering becomes severe during the welding work for obtaining the weld metal, and welding workability may be poor.

Thus, the REM content in the weld metal is set from 0% to 0.500%.

A lower limit of the REM content in the weld metal is preferably 0.001%, 0.002%, or 0.005%.

An upper limit of the REM content in the weld metal is preferably 0.480%, 0.450%, 0.430%, or 0.400%.

(Zr: from 0% to 0.500%)

Zr can stabilize a bead shape of the welding work for obtaining the weld metal, and thus may be contained in the weld metal.

However, when the Zr content in the weld metal is excessive, an oxygen amount of the weld metal is increased, and the toughness in low-temperature may be deteriorated.

Therefore, the Zr content in the weld metal is set from 0% to 0.500%.

A lower limit of the Zr content in the weld metal is preferably 0.001%, 0.002%, or 0.005%.

An upper limit of the Zr content in the weld metal is preferably 0.480%, 0.450%, 0.430%, or 0.400%.

(N: from 0% to 0.5000%)

N stabilizes the austenite phase. N is also an interstitial solid solution strengthening element, and may be contained in the weld metal in order to improve the toughness in low-temperature and the strength of the weld metal.

However, when the N content in the weld metal is excessive, the occurrence of blowing increases, which causes welding defects.

Therefore, the N content in the weld metal is set from 0% to 0.5000%.

A lower limit of the N content in the weld metal is preferably 0.0010%, 0.0100% or 0.0500%.

An upper limit of the N content in the weld metal is preferably 0.4500%, 0.4000%, or 0.3500%.

(O: from 0.0010% to 0.1500%)

O is contained in the weld metal as an impurity. However, when the O content is excessive, the toughness and the ductility are deteriorated, and thus an upper limit of the O content in the weld metal is set to 0.1500% or less.

However, an extreme reduction in the O content leads to an increase in manufacturing cost, and thus a lower limit of the O content in the weld metal is set to 0.0010% or less.

The lower limit of the O content in the weld metal is preferably 0.0020% or 0.0030%.

An upper limit of the O content in the weld metal is preferably 0.1300% or 0.1000%.

(Balance: Fe and Impurities)

The other components of a balance in the chemical component of the weld metal are Fe and impurities.

The impurity means a raw material such as ore or scrap, or a component mixed due to various factors in the manufacturing process when the weld metal is industrially manufactured, and is acceptable within a range not adversely affecting the characteristics of the weld metal.

(Total (Mn + Ni) of Mn Content and Ni Content)

Each of Mn and Ni stabilizes the austenite phase. Each of Mn and Ni improves the toughness in low-temperature of the weld metal. However, since Ni is an expensive metal, in order to improve the toughness in low-temperature of the weld metal while suppressing the cost of the weld metal, while the Mn content and the Ni content in the weld metal satisfy the above ranges, respectively, the total (Mn + Ni) of the Mn content and the Ni content is set to 5.0% or more.

The total (Mn + Ni) of the Mn content and the Ni content in the weld metal is preferably 5.2% or more, 6.2% or more, 6.7% or more, 7.0% or more, 10.0% or more, or 15.0% or more.

When Mn is excessively increased, the stacking fault energy is lowered and the toughness is deteriorated. Therefore, from the viewpoint of suppressing the cost of the weld metal and improving the toughness in low-temperature of the weld metal, it is preferable that while each of the Mn content and the Ni content in the weld metal satisfies the above range, the total (Mn + Ni) of the Mn content and the Ni content is set to 37.0% or less.

The total (Mn + Ni) of the Mn content and the Ni content in the weld metal is more preferably 35.0% or less, 32.0% or less, or 30.0% or less.

(Total (Mn + Ni + Cr) of Mn Content, Ni Content and Cr Content)

Each of Mn, Ni and Cr stabilizes the austenite phase. Each of Mn, Ni and Cr improves the toughness in low-temperature of the weld metal. However, since Ni is an expensive metal, in order to improve the toughness in low-temperature of the weld metal while suppressing the cost of the weld metal, it is preferable that while each of the Mn content, the Ni content, and the Cr content satisfies the above range, the total (Mn + Ni + Cr) of the Mn content, the Ni content, and the Cr content in the weld metal is set to 15.0% or more.

The total (Mn + Ni + Cr) of the Mn content, the Ni content, and the Cr content in the weld metal is more preferably 17.0% or more, 19.0% or more, 20.0% or more, 22.0% or more, 24.0% or more, 26.0% or more, 28.0% or more, or 30.0% or more.

When the Mn content is not excessive, the stacking fault energy is not excessively lowered, and the toughness can be secured. When the Cr content is not excessive, the amount of the low-melting-point compound in the molten metal can be reduced, and the expansion of the solid-liquid coexisting temperature range of the molten metal can be suppressed, and thus the occurrence of the hot cracking can be suppressed. Therefore, from the viewpoint of suppressing the cost of the weld metal, improving the toughness in low-temperature of the weld metal, reducing the generation amount of the low-melting-point compound in the molten metal, and suppressing the occurrence of the hot cracking, it is preferable that while each of the Mn content, the Ni content, and the Cr content in the weld metal satisfies the above range, the total (Mn + Ni + Cr) of the Mn content, the Ni content, and the Cr content is set to 47.0% or less.

The total (Mn + Ni + Cr) of the Mn content, the Ni content, and the Cr content in the weld metal is more preferably 45.0% or less, 42.0% or less, or 40.0% or less.

(Mass Ratio (Ni/Mn) of Mn Content to Ni Content)

Each of Mn and Ni stabilizes the austenite phase. Each of Mn and Ni improves the toughness in low-temperature of the weld metal. However, Ni is an expensive metal, and when Mn is further excessively increased, the stacking fault energy is lowered and the toughness is deteriorated.

Therefore, from the viewpoint of improving the toughness in low-temperature of the weld metal while suppressing the cost of the weld metal, a mass ratio (Ni/Mn) of the Mn content to the Ni content in the weld metal is preferably set to 0.10 or more.

A lower limit of the mass ratio (Ni/Mn) of the Mn content to the Ni content in the weld metal is more preferably 0.20, 0.30, 0.50, 0.70, 0.73, 1.00, 1.10, or 1.20.

An upper limit of the mass ratio (Ni/Mn) of the Mn content to the Ni content in the weld metal is preferably 10.00, 8.00, or 5.00.

(Total (Nb + Ti + V + Al) of Nb Content, Ti Content, V Content, and Al Content)

Nb, Ti, V, and Al are all elements that improve the strength of the weld metal by precipitation strengthening, and thus the weld metal contains one or more of Nb, Ti, V, and Al, and the total (Nb + Ti + V + Al) thereof is set to 0.005% or more.

A lower limit of the total (Nb + Ti + V + Al) of Nb, Ti, V, and Al in the weld metal is preferably 0.010%, 0.020%, 0.050%, 0.100%, 0.300%, or 0.500%.

An upper limit of the total (Nb + Ti + V + Al) of Nb, Ti, V, and Al in the weld metal is not particularly limited, but is preferably 2.000%, 1.800%, 1.500%, or 1.300% in order to prevent toughness deterioration due to excessive precipitation.

(Fcc Ratio Obtained by Magnetic Induction Method)

In order to increase the toughness in low-temperature in the weld metal, it is preferable to increase a ratio of austenite in the structure of the weld metal. Therefore, the fcc ratio in the weld metal is preferably set to 70% or more. The fcc ratio is more preferably 80% or more, or 90% or more, and may be 100%. The balance of the structure is bcc.

The fcc ratio in the structure of the weld metal can be measured by the following method.

A sample is collected from the weld metal, bcc ratios (%) are measured on a surface of the sample by a magnetic induction method by using FERITSCOPE (registered trademark) FMP30 (manufactured by Fischer Instruments K.K.) and using a probe (FGAB 1.3 Fe) manufactured by Fischer Instruments K.K. as a probe of the measuring instrument, and an arithmetic average value of the measured bcc ratios is determined. Using the obtained average value of the bcc ratios, the fcc ratio (%) in the structure of the weld metal is determined by the following equation.

$$\text{fcc ratio} = 100 - \text{bcc ratio}$$

(Tensile Strength)

The tensile strength of the weld metal is preferably set to from 590 MPa to 1200 MPa, for example. The tensile strength can be measured by performing a tensile test of the weld metal in accordance with JIS Z3111:2005.

<Weld Joint and Weld Structural Object>

Next, a weld joint and a weld structural object according to the disclosure will be described.

A weld joint according to the disclosure includes the weld metal according to the disclosure. For example, the weld joint according to the disclosure includes a steel material that is a base material and a welded portion including the weld metal and a weld heat-affected portion.

The weld structural object according to the disclosure includes the weld joint according to the disclosure.

The weld joint according to the disclosure includes the weld metal according to the disclosure, and thus the weld joint is inexpensive and has high toughness in low-temperature.

Here, a method of manufacturing the weld joint according to the disclosure will be described.

The method of manufacturing described below is an example, and the method of manufacturing the weld joint according to the disclosure is not limited to the following method.

The weld joint according to the disclosure can be manufactured by welding the steel material that is the base material by using the weld material.

For example, the method of manufacturing the weld joint according to the disclosure is obtained by performing gas metal arc welding on the steel material by using a flux-cored wire. In this case, the chemical component of the weld metal include components derived from the flux-cored wire that is the weld material and the steel material that is the base material.

The method of manufacturing the weld joint according to the disclosure is obtained by performing submerged arc welding using a solid wire and a flux. For example, in the submerged arc welding, it is possible to apply a general submerged arc welding apparatus in which a granular flux is sprayed on a weld line in advance, the solid wire is fed into the flux, and welding is performed by arc heat generated from an arc between the solid wire and the steel material in the flux. In this case, the chemical component of the weld metal include components derived from the solid wire and the flux that are the weld material and the steel material that is the base material.

Further, the method of manufacturing the weld joint according to the disclosure can be obtained by, for example, a welding method such as shielded metal arc welding, simple electrogas arc welding, electroslag welding, TIG welding, or gas metal welding by using the solid wire. In this case, the chemical component of the weld metal include components derived from the weld material and the steel material that is the base material.

The type of the base material included in the weld joint according to the disclosure, that is, the steel material (welding target material) used in the method of manufacturing the weld joint is not particularly limited, but for example, Ni-based low temperature steel containing from 6% to 9% Ni with a plate thickness of 20 mm or more can be suitably used.

EXAMPLES

Next, the feasibility and effects of the disclosure will be described in more detail with reference to the disclosure examples and the comparative examples, but the following examples do not limit the disclosure, and any design change dedicated to the gist of the preceding and following description is included in the technical scope of the disclosure.

The weld metal was obtained by shielded metal arc welding (SMAW) using a shielded metal arc welding rod, gas metal arc welding (GMAW) using the flux-cored wire, and the submerged arc welding (SAW) using the solid wire and the flux by the methods described below.

<1. Shielded Metal Arc Welding (SMAW) Using Shielded Metal Arc Welding Rod>

(Manufacturing of Shielded Metal Arc Welding Rod)

The shielded metal arc welding rod was manufactured by the method described below.

First, the shielded metal arc welding rod was experimentally produced by applying a flux including components shown in Table 2-C to a core wire including the chemical component shown in Table 2-A and Table 2-B and firing the core wire in a temperature range of from 300°C to 500°C for a range from 1 hour to 3 hours. The final welding rod diameter of the obtained shielded metal arc welding rod was φ6.0 mm, and the average thickness of the flux was 1.0 mm. The configurations of these shielded metal arc welding rods (No. 1 to 3, 15, A1, A4) are shown in Tables 2-A to 2-C.

The unit of the contents of the chemical component of the core wire shown in Tables 2-A and 2-B is "% by mass with respect to the total mass of the core wire". The unit of the contents of the components (oxide, fluoride, and metal carbonate) of the flux shown in Table 2-C is "% by mass with respect to the total mass of the flux".

In Table 2-C, "$TiO_2$" represents the total of Ti oxides in terms of $TiO_2$, "$SiO_2$" represents the total of Si oxides in terms of $SiO_2$, "$Al_2O_3$" represents the total of Al oxides in terms of $Al_2O_3$, "MgO" represents the total of Mg oxides in terms of MgO, "$Na_2O$" represents the total of Na oxides in terms of $Na_2O$, and "$K_2O$" represents the total of K oxides in terms of $K_2O$.

The balance (that is, components other than the respective components shown in the tables) of the core wire shown in Tables 2-A and 2-B is iron and impurities.

In Tables 2-A to 2-C, blanks in the table regarding the contents of the chemical component of the core wire and the components of the flux mean that the contents of the components and the like are less than the number of significant digits. These components and the like may be unavoidably mixed or generated in a content less than the number of significant digits.

(Manufacturing of Weld Joint)

The weld joint including the weld metal was manufactured by performing shielded metal arc welding with vertical upward welding using the obtained shielded metal arc welding rod (No. 1 to 3, 15, A1, A4). 9% Ni steel (steel sheet in accordance with JIS G 3127:2013 SL9N 590) having a sheet thickness of 50 mm was used as a steel sheet to be welded. All the welding currents at the time of welding were set to an alternating current, and welding conditions were set to the conditions of "shielded metal arc welding (SMAW)" described in Table 5.

The chemical component of the weld metal in the manufactured weld joint are shown in Tables 1-A to 1-C (No. 1 to 3, 15, A1, A4). In Tables 1-A to 1-C, numerical values outside the range defined in the disclosure are underlined.

<2. Gas Shielded Arc Welding (GMAW) Using Flux-Cored Wire>

(Manufacturing of Flux-Cored Wire)

The flux-cored wire was manufactured by the method described below.

First, while feeding a steel strip in the longitudinal direction, the steel strip was formed using a forming roll to obtain an open tube having a U shape. The flux was supplied into the open tube through an opening of the open tube, and edge portions of the opening of the open tube facing each other were butt-welded to obtain a seamless tube. The seamless tube was wire drawn to obtain the flux-cored wire including no slit-like gap.

In this way, the flux-cored wire having a final wire diameter of φ1.2 mm was experimentally produced.

In the middle of the wire drawing operation of these flux-cored wires, the flux-cored wires were annealed in a temperature range of from 650°C to 950°C for 4 hours or more. After the experimental production, a lubricant was applied to the wire surface. The configurations (the chemical component of the entire wire, components of the flux) of these flux-cored wires (No. 4 to 9, A2) are shown in Tables 3-A to 3-C.

The unit of the contents of the chemical component of the entire wire and the contents of the components (oxides and fluorides) of the flux shown in Tables 3-A to 3-C is "% by mass with respect to the total mass of the flux-cored wire". In the table, "chemical component of the entire wire" means "chemical component of the wire excluding oxides and fluorides".

The balance (that is, components other than the respective components shown in the table) of the chemical component of the entire wire shown in Tables 3-A and 3-B includes iron and impurities.

The elements contained in the flux-cored wires shown in Tables 3-A and 3-B are in the form of steel outer skins or metal powders.

In Tables 3-A to 3-C, blanks in the table regarding the contents of the chemical component of the entire wire and the components of the flux mean that the contents of the components and the like are less than the number of significant digits. These components and the like may be unavoidably mixed or generated in a content less than the number of significant digits.

(Manufacturing of Weld Joint)

The weld joint including the weld metal was manufactured by performing gas shielded arc welding with vertical upward welding using the obtained flux-cored wire (No. 4 to 9, A2). 9% Ni steel (steel sheet in accordance with JIS G 3127: SL9N 590) having a sheet thickness of 50 mm was used as a steel sheet to be welded. The type of the welding gas at the time of welding was Ar-20% $CO_2$ gas. All the welding current at the time of welding was set to a direct current, and all the polarity of the wire was positive. Welding conditions were set to the conditions of "flux-cored wire (GMAW)" described in Table 5.

The chemical component of the weld metal in the manufactured weld joint is shown in Tables 1-A to 1-C (No. 4 to 9, A2). In Tables 1-A to 1-C, numerical values outside the range defined in the disclosure are underlined.

<3.Submerged Arc Welding (SAW) Using Solid Wire and Flux>

(Manufacturing of Solid Wire)

The solid wire was manufactured by the method described below.

First, steel including the chemical component shown in Tables 4-A and 4-B was melted, and then subjected to forging processing. Thereafter, the steel was processed into a rod shape through rolling processing, and the steel having the rod shape was wire drawn to obtain the solid wire. In this way, solid wires (No. 10 to 14, 16 to 17, A3, A5) each having a final wire diameter of φ2.4 mm were experimentally produced.

When the chemical component of the obtained solid wires were analyzed, the solid wires included the chemical component shown in Tables 4-A and 4-B. After the experimental production, a lubricant was applied to the wire surface.

The unit of the contents of the chemical component of the wire shown in Tables 4-A and 4-B is "% by mass with respect to the total mass of the solid wire".

The balance (that is, components other than the respective components shown in the table) of the wire shown in Tables 4-A and 4-B includes iron and impurities.

In Tables 4-A and 4-B, blanks in the table regarding the contents of the chemical component of the wire mean that the contents of the chemical component are less than the number of significant digits. These chemical components and the like may be unavoidably mixed or generated in a content less than the number of significant digits.

(Manufacturing of Weld Joint)

The weld joint including the weld metal was manufactured by welding downward by the submerged arc welding using the obtained solid wires (No. 10 to 14, 16 to 17, A3, A5). Specifically, the submerged arc welding was performed using the solid wires in combination with NITTETSU FLUX 10 H manufactured by NIPPON STEEL WELDING & ENGINEERING CO., LTD., which is a flux for the submerged arc welding.

9% Ni steel (steel sheet in accordance with JIS G 3127: SL9N 590) having a sheet thickness of 40 mm was used as a steel sheet to be welded. All the welding current at the time of welding was set to a direct current, and all the polarity of the wire was positive. Welding conditions were set to the conditions of "submerged arc welding (SAW)" described in Table 5.

The chemical component of the weld metal in the manufactured weld joint are shown in Tables 1-A to 1-C (No. 10 to 14, 16 to 17, A3, A5). In Tables 1-A to 1-C, numerical values outside the range defined in the disclosure are underlined.

<Evaluation Test>

(Evaluation of Toughness in low-temperature)

Three impact test pieces (V-notch test pieces each having a notch depth of 2 mm) were taken from the center in a plate thickness direction of the weld metal (No. 1 to 17, A1 to A5) obtained in the disclosure example and the comparative example.

The three impact test pieces were subjected to a Charpy impact test in accordance with JIS Z2242:2005 at -196°C.

Then, the case in which the Charpy absorbed energy average value of the three impact test pieces at -196°C was 34 J or more was rated as "excellent", the case in which the average value was 27 J or more and less than 34 J was rated as "passed", and the case in which the average value was less than 27 J was rated as "failed".

[Table 1-A]

| No. | Classification | Welding method | Chemical component (% by mass) (balance is Fe and impurities) | | | | | | | | | | |
|---|---|---|---|---|---|---|---|---|---|---|---|---|---|
| | | | C | Si | Mn | P | S | Cu | Ni | Cr | Mo | Nb | V |
| 1 | Disclosure example | SMAW | 0.570 | 0.32 | 16.8 | 0.017 | 0.010 | | 24.5 | 4.7 | 6.9 | | 1.00 |
| 2 | Disclosure example | SMAW | 0.120 | 0.25 | 22.8 | 0.024 | 0.009 | | 1.9 | 9.2 | 7.2 | 0.937 | |
| 3 | Disclosure example | SMAW | 0.340 | 0.30 | 8.0 | 0.009 | 0.009 | | 12.0 | 7.0 | 3.0 | 0.020 | |
| 4 | Disclosure example | GMAW | 0.510 | 0.29 | 22.0 | 0.036 | 0.010 | 1.3 | 27.5 | 18.0 | | 0.596 | |
| 5 | Disclosure example | GMAW | 0.380 | 0.36 | 24.3 | 0.012 | 0.042 | | 12.2 | 2.0 | 5.4 | 0.115 | |
| 6 | Disclosure example | GMAW | 0.357 | 0.43 | 9.1 | 0.009 | 0.009 | | 17.1 | 7.4 | 3.4 | 0.018 | |
| 7 | Disclosure example | GMAW | 0.770 | 0.36 | 15.5 | 0.017 | 0.032 | 1.5 | 14.6 | 0.6 | 0.4 | | 0.56 |
| 8 | Disclosure example | GMAW | 0.450 | 0.17 | 14.2 | 0.045 | 0.028 | | 18.9 | | 6.4 | | 0.15 |
| 9 | Disclosure example | GMAW | 0.590 | 0.43 | 28.0 | 0.026 | 0.036 | | 11.5 | | 7.4 | | 0.40 |
| 10 | Disclosure example | SAW | 0.720 | 0.32 | 24.9 | 0.027 | 0.039 | | 21.9 | 6.5 | 9.4 | 0.720 | |
| 11 | Disclosure example | SAW | 0.390 | 0.23 | 27.3 | 0.013 | 0.004 | | 17.8 | 4.3 | | 0.352 | |
| 12 | Disclosure example | SAW | 0.430 | 0.25 | 12.5 | 0.009 | 0.009 | | 12.8 | | 2.1 | 0.028 | |
| 13 | Disclosure example | SAW | 0.950 | 0.13 | 5.0 | 0.014 | 0.001 | | 21.9 | 7.2 | 0.3 | 0.138 | 0.70 |

(continued)

| No. | Classification | Welding method | Chemical component (% by mass) (balance is Fe and impurities) | | | | | | | | | | |
| --- | --- | --- | --- | --- | --- | --- | --- | --- | --- | --- | --- | --- | --- |
| | | | C | Si | Mn | P | S | Cu | Ni | Cr | Mo | Nb | V |
| 14 | Disclosure example | SAW | 0.130 | 0.12 | 27.4 | 0.034 | 0.048 | 3.3 | 2.7 | 2.2 | | 0.586 | 0.83 |
| 15 | Disclosure example | SMAW | 0.340 | 0.05 | 5.0 | 0.009 | 0.009 | | 4.0 | 7.0 | 3.0 | 0.020 | |
| 16 | Disclosure example | SAW | 0.670 | 0.08 | 15.2 | 0.014 | 0.001 | | 28.0 | 7.2 | 0.3 | | |
| 17 | Disclosure example | SAW | 0.200 | 0.20 | 4.5 | 0.007 | 0.008 | | 15.0 | 5.0 | 5.0 | | 0.12 |
| A1 | Comparative example | SMAW | 0.910 | 0.41 | 8.7 | 0.004 | 0.046 | | 23.5 | | | | |
| A2 | Comparative example | GMAW | 0.090 | 0.30 | **1.0** | 0.045 | 0.016 | | 2.0 | 6.3 | 6.9 | | |
| A3 | Comparative example | SAW | 0.090 | 0.19 | **35.0** | 0.024 | 0.029 | | 5.8 | | 7.3 | | 0.89 |
| A4 | Comparative example | SMAW | 0.340 | 0.30 | **3.0** | 0.009 | 0.009 | | 5.0 | 8.0 | 3.0 | | |
| A5 | Comparative example | SAW | 0.510 | 0.29 | 29.0 | 0.036 | 0.010 | 1.3 | **0.5** | | | 0.125 | |

[Table 1-B]

| No. | Classification | Chemical component (% by mass) (balance is Fe and impurities) | | | | | | | | | | | |
| --- | --- | --- | --- | --- | --- | --- | --- | --- | --- | --- | --- | --- | --- |
| | | Co | Pb | Sn | W | Mg | Al | Ca | Ti | B | REM | Zr | N |
| 1 | Disclosure example | 0.55 | 0.08 | | 4.3 | 4.6 | 0.016 | | | | | | 0.1021 |
| 2 | Disclosure example | 0.24 | | 0.15 | 13.8 | | | | | | | | 0.0979 |
| 3 | Disclosure example | 0.09 | | | | | 0.015 | | 0.010 | | | | 0.0180 |
| 4 | Disclosure example | 0.35 | 0.66 | | | | | | | 0.3273 | 0.045 | | 0.3850 |
| 5 | Disclosure example | 0.76 | | | | | 0.058 | 1.5 | 0.028 | | | | 0.0880 |
| 6 | Disclosure example | | | | | | 0.009 | | 0.054 | 0.0010 | | | 0.0145 |
| 7 | Disclosure example | | | 0.06 | | | | | 0.018 | | | 0.057 | 0.0182 |
| 8 | Disclosure example | 0.97 | | | | 4.7 | | | 0.026 | | | 0.046 | 0.0175 |
| 9 | Disclosure example | | | | 10.2 | | | | | 0.3406 | | | 0.0082 |
| 10 | Disclosure example | | | | 10.1 | | | 1.2 | | 0.2640 | | | 0.1314 |
| 11 | Disclosure example | 0.80 | 0.41 | | 2.5 | | | | | | | | 0.0902 |

(continued)

| No. | Classification | Chemical component (% by mass) (balance is Fe and impurities) | | | | | | | | | | | |
|---|---|---|---|---|---|---|---|---|---|---|---|---|---|
| | | Co | Pb | Sn | W | Mg | Al | Ca | Ti | B | REM | Zr | N |
| 12 | Disclosure example | 0.01 | | | | | 0.030 | | | | | | 0.0098 |
| 13 | Disclosure example | | | | | 4.2 | | | | | 0.095 | 0.045 | 0.0169 |
| 14 | Disclosure example | | | | | 5.0 | | | 0.031 | 0.0480 | 0.044 | | 0.0197 |
| 15 | Disclosure example | | | | | | 0.015 | | 0.010 | | | | 0.0180 |
| 16 | Disclosure example | | | | | | 0.009 | | 0.054 | | | | 0.0169 |
| 17 | Disclosure example | | | | | | | | | | | | 0.0245 |
| A1 | Comparative example | | | 0.25 | 6.8 | 2.8 | 0.003 | 2.4 | | | 0.035 | | 0.0182 |
| A2 | Comparative example | 0.19 | | | | | 0.096 | | 0.033 | | 0.090 | 0.100 | 0.1314 |
| A3 | Comparative example | | | | 5.8 | | | | | | | | 0.0102 |
| A4 | Comparative example | 0.09 | | | | | | | 0.010 | | | | 0.0180 |
| A5 | Comparative example | | | | | | | | | | | | 0.3850 |

[Table 1-C]

| No. | Classification | Chemical component (% by mass) (balance is Fe and impurities) | | | | | fcc ratio (%) |
|---|---|---|---|---|---|---|---|
| | | O | Mn + Ni | Nb + Ti + V + Al | Mn/Ni | Mn + Ni + Cr | |
| 1 | Disclosure example | 0.0188 | 41.3 | 1.016 | 0.69 | 46.0 | 100 |
| 2 | Disclosure example | 0.0200 | 24.7 | 0.937 | 12.00 | 33.9 | 100 |
| 3 | Disclosure example | 0.0239 | 20.0 | 0.045 | 0.67 | 27.0 | 100 |
| 4 | Disclosure example | 0.0455 | 49.5 | 0.596 | 0.80 | 67.5 | 100 |
| 5 | Disclosure example | 0.0413 | 36.5 | 0.201 | 1.99 | 38.5 | 100 |
| 6 | Disclosure example | 0.0471 | 26.2 | 0.081 | 0.53 | 33.6 | 100 |
| 7 | Disclosure example | 0.0587 | 30.1 | 0.578 | 1.06 | 30.7 | 100 |
| 8 | Disclosure example | 0.0606 | 33.1 | 0.176 | 0.75 | 33.1 | 100 |
| 9 | Disclosure example | 0.0686 | 39.5 | 0.400 | 2.43 | 39.5 | 100 |
| 10 | Disclosure example | 0.0097 | 46.8 | 0.720 | 1.14 | 53.3 | 100 |
| 11 | Disclosure example | 0.0094 | 45.1 | 0.352 | 1.53 | 49.4 | 100 |
| 12 | Disclosure example | 0.0195 | 25.3 | 0.058 | 0.98 | 25.3 | 100 |
| 13 | Disclosure example | 0.0233 | 26.9 | 0.838 | 0.23 | 34.1 | 100 |
| 14 | Disclosure example | 0.0153 | 30.1 | 1.447 | 10.15 | 32.3 | 98 |
| 15 | Disclosure example | 0.0239 | 9.0 | 0.045 | 1.25 | 16.0 | 89 |

(continued)

| No. | Classification | Chemical component (% by mass) (balance is Fe and impurities) | | | | | | fcc ratio (%) |
|---|---|---|---|---|---|---|---|---|
| | | O | Mn + Ni | Nb + Ti + V + Al | Mn/Ni | Mn + Ni + Cr | | |
| 16 | Disclosure example | 0.0283 | 43.2 | 0.063 | 0.54 | 50.4 | | 100 |
| 17 | Disclosure example | 0.0215 | 19.5 | 0.120 | 0.30 | 24.5 | | 72 |
| A1 | Comparative example | 0.0195 | 32.2 | **0.003** | 0.37 | 32.2 | | 100 |
| A2 | Comparative example | 0.0307 | **3.0** | 0.129 | 0.50 | 9.3 | | 0 |
| A3 | Comparative example | 0.0041 | 40.8 | 0.890 | 6.03 | 40.8 | | 100 |
| A4 | Comparative example | 0.0239 | 8.0 | 0.010 | 0.60 | 16.0 | | 65 |
| A5 | Comparative example | 0.0455 | 29.5 | 0.125 | 58.00 | 29.5 | | 100 |

[Table 2-A]

| No. | Classification | Welding method | Chemical component of core wire (% by mass) (balance is Fe and impurities) | | | | | | | | | | |
|---|---|---|---|---|---|---|---|---|---|---|---|---|---|
| | | | C | Si | Mn | P | S | Cu | Ni | Cr | Mo | Nb | V |
| 1 | Disclosure example | SMAW | 0.570 | 0.400 | 21.000 | 0.002 | 0.010 | | 24.500 | 4.700 | 6.900 | | 1.000 |
| 2 | Disclosure example | SMAW | 0.120 | 0.313 | 28.500 | 0.002 | 0.009 | | 1.900 | 9.200 | 7.200 | 0.937 | |
| 3 | Disclosure example | SMAW | 0.340 | 0.375 | 10.000 | 0.001 | 0.009 | | 12.000 | 7.000 | 3.000 | 0.020 | |
| 15 | Disclosure example | SMAW | 0.340 | 0.063 | 6.250 | 0.001 | 0.009 | | 4.000 | 7.000 | 3.000 | 0.020 | |
| A1 | Comparative example | SMAW | 0.200 | 0.250 | 5.625 | 0.001 | 0.008 | | 15.000 | 5.000 | 5.000 | | 0.120 |
| A4 | Comparative example | SMAW | 0.340 | 0.375 | 3.750 | 0.001 | 0.009 | | 5.000 | 8.000 | 3.000 | | |

[Table 2-B]

| No. | Classification | Chemical component of core wire (% by mass) (balance is Fe and impurities) | | | | | | | | | | | |
|---|---|---|---|---|---|---|---|---|---|---|---|---|---|
| | | Co | Pb | Sn | W | Mg | Al | Ca | Ti | B | REM | Zr | IN |
| 1 | Disclosure example | 0.550 | 0.080 | | 4.300 | 9.200 | 1.600 | | | | | | 0.085 |
| 2 | Disclosure example | 0.240 | | 0.150 | 13.800 | | | | | | | | 0.082 |
| 3 | Disclosure example | 0.090 | | | | | 1.500 | | 0.014 | | | | 0.015 |
| 15 | Disclosure example | | | | | | 1.500 | | 0.014 | | | | 0.015 |
| A1 | Comparative example | | | | | | | | | | | | 0.020 |
| A4 | Comparative example | 0.090 | | | | | | | 0.014 | | | | 0.015 |

[Table 2-C]

| No. | Classification | Components of flux | | | | | | | |
|---|---|---|---|---|---|---|---|---|---|
| | | $TiO_2$ | $SiO_2$ | $Al_2O_3$ | MgO | $Na_2O$ | $K_2O$ | $CaF_2$ | $CaCO_3$ |
| 1 | Disclosure example | | 6.3 | 4.6 | 0.1 | 1.3 | 1.3 | 23.0 | 63.4 |
| 2 | Disclosure example | 10.0 | 10.0 | 7.5 | | | | 2.5 | 70.0 |
| 3 | Disclosure example | | 6.3 | 4.6 | 0.1 | 1.3 | 1.3 | 23.0 | 63.4 |
| 15 | Disclosure example | 10.0 | 10.0 | 7.5 | | | | 2.5 | 70.0 |
| A1 | Comparative example | | 6.3 | 4.6 | 0.1 | 1.3 | 1.3 | 23.0 | 63.4 |
| A4 | Comparative example | 10.0 | 10.0 | 7.5 | | | | 20.0 | 52.6 |

[Table 3-A]

| No. | Classification | Welding method | Chemical component of entire wire (% by mass) (balance is Fe and impurities) | | | | | | | | | | |
|---|---|---|---|---|---|---|---|---|---|---|---|---|---|
| | | | C | Si | Mn | P | S | Cu | Ni | Cr | Mo | Nb | V |
| 4 | Disclosure example | GMAW | 0.510 | 0.363 | 27.500 | 0.003 | 0.010 | 1.300 | 27.500 | 18.000 | | 0.596 | |
| 5 | Disclosure example | GMAW | 0.380 | 0.450 | 30.375 | 0.001 | 0.042 | | 12.200 | 2.000 | 5.400 | 0.115 | |
| 6 | Disclosure example | GMAW | 0.357 | 0.538 | 11.425 | 0.001 | 0.009 | | 17.100 | 7.400 | 3.400 | 0.018 | |
| 7 | Disclosure example | GMAW | 0.770 | 0.450 | 19.375 | 0.002 | 0.032 | 1.500 | 14.600 | 0.600 | 0.400 | | 0.560 |
| 8 | Disclosure example | GMAW | 0.450 | 0.213 | 17.750 | 0.004 | 0.028 | | 18.900 | | 6.400 | | 0.150 |
| 9 | Disclosure example | GMAW | 0.590 | 0.538 | 35.000 | 0.002 | 0.036 | | 11.500 | | 7.400 | | 0.400 |
| A2 | Comparative example | GMAW | 0.090 | 0.375 | 1.250 | 0.004 | 0.016 | | 2.000 | 6.300 | 6.900 | | |

[Table 3-B]

| No. | Classification | Chemical component of entire wire (% by mass) (balance is Fe and impurities) | | | | | | | | | | | |
|---|---|---|---|---|---|---|---|---|---|---|---|---|---|
| | | Co | Pb | Sn | W | Mg | Al | Ca | Ti | B | REM | Zr | N |
| 4 | Disclosure example | 0.350 | 0.660 | | | | | | | 0.385 | 0.090 | | 0.321 |
| 5 | Disclosure example | 0.760 | | | | | 5.800 | 3.000 | 0.040 | | | | 0.073 |
| 6 | Disclosure example | | | | | | 0.900 | | 0.077 | 0.001 | | | 0.012 |
| 7 | Disclosure example | | | 0.060 | | | | | 0.026 | | | 0.114 | 0.015 |
| 8 | Disclosure example | 0.970 | | | | 9.400 | | | 0.037 | | | 0.092 | 0.015 |
| 9 | Disclosure example | | | | 10.200 | | | | | 0.401 | | | 0.007 |
| A2 | Comparative example | 0.190 | | | | | 9.600 | | 0.047 | | 0.180 | 0.200 | 0.110 |

[Table 3-C]

| No. | Classification | Components of flux | | | | | | |
|---|---|---|---|---|---|---|---|---|
| | | $TiO_2$ | $SiO_2$ | $Al_2O_3$ | MgO | $Na_2O$ | $K_2O$ | $CaF_2$ |
| 4 | Disclosure example | 5.0 | 1.0 | | | 0.1 | 0.1 | 0.1 |
| 5 | Disclosure example | | 0.1 | 7.5 | | | | |
| 6 | Disclosure example | 5.0 | 1.0 | | | 0.1 | 0.1 | 0.1 |
| 7 | Disclosure example | | 0.1 | 7.5 | | | | |
| 8 | Disclosure example | 5.0 | 1.0 | | | 0.1 | 0.1 | 0.1 |
| 9 | Disclosure example | | 0.1 | 7.5 | | | | |
| A2 | Comparative example | 5.0 | 1.0 | | | 0.1 | 0.1 | 0.1 |

[Table 4-A]

| Wire No. | Classification | Welding method | Chemical component of wire (% by mass) (balance is Fe and impurities) | | | | | | | | | | |
|---|---|---|---|---|---|---|---|---|---|---|---|---|---|
| | | | C | Si | Mn | P | S | Cu | Ni | Cr | Mo | Nb | V |
| 10 | Disclosure example | SAW | 0.864 | 0.480 | 37.350 | 0.003 | 0.047 | | 26.280 | 7.800 | 10.890 | 0.650 | |
| 11 | Disclosure example | SAW | 0.468 | 0.345 | 40.950 | 0.001 | 0.005 | | 21.360 | 5.160 | | 0.422 | |
| 12 | Disclosure example | SAW | 0.516 | 0.375 | 18.750 | 0.001 | 0.011 | | 15.360 | | 2.520 | 0.034 | |
| 13 | Disclosure example | SAW | 1.140 | 0.195 | 7.500 | 0.002 | 0.001 | | 26.280 | 8.640 | 0.360 | 0.166 | 0.840 |
| 14 | Disclosure example | SAW | 0.156 | 0.180 | 41.100 | 0.004 | 0.058 | 3.960 | 3.240 | 2.640 | | 0.703 | 0.996 |
| 16 | Disclosure example | SAW | 0.240 | 0.300 | 6.750 | 0.001 | 0.010 | | 18.000 | 6.000 | 6.000 | | 0.144 |
| 17 | Disclosure example | SAW | 0.240 | 0.300 | 6.750 | 0.001 | 0.010 | | 18.000 | 6.000 | 6.000 | | 0.144 |
| A3 | Comparative example | SAW | 0.108 | 0.285 | 52.500 | 0.003 | 0.035 | | 6.960 | | 8.760 | | 1.068 |
| A5 | Comparative example | SAW | 0.612 | 0.435 | 43.500 | 0.004 | 0.012 | 1.560 | 0.600 | | | 0.150 | |

[Table 4-B]

| Wire No. | Classification | Chemical component of wire (% by mass) (balance is Fe and impurities) | | | | | | | | | | | |
|---|---|---|---|---|---|---|---|---|---|---|---|---|---|
| | | Co | Pb | Sn | W | Mg | Al | Ca | Ti | B | REM | Zr | N |
| 10 | Disclosure example | | | | 12.120 | | | 2.880 | | 0.373 | | | 0.131 |
| 11 | Disclosure example | 0.960 | 0.492 | | 3.000 | | | | | | | | 0.090 |
| 12 | Disclosure example | 0.012 | | | | | 3.600 | | | | | | 0.010 |
| 13 | Disclosure example | | | | | 10.080 | | | | | 0.228 | 0.108 | 0.017 |
| 14 | Disclosure example | | | | | 12.000 | | | 0.053 | 0.068 | 0.106 | | 0.020 |
| 16 | Disclosure example | | | | | | | | | | | | 0.025 |
| 17 | Disclosure example | | | | | | | | | | | | 0.025 |
| A3 | Comparative example | | | | 6.960 | | | | | | | | 0.010 |
| A5 | Comparative example | | | | | | | | | | | | 0.385 |

[Table 5]

| Welding method | Current | Voltage | Speed | Heat input |
|---|---|---|---|---|
| | A | V | mm/mm | kJ/mm |
| Shielded metal arc welding (SMAW) | 140 | 22 | 160 | 1.2 |
| Flux-cored wire (GMAW) | 200 | 31 | 350 | 1.1 |
| Submerged arc welding (SAW) | 360 | 30 | 350 | 1.9 |

[Table 6]

| No. | Classification | Toughness in low-temperature |
|---|---|---|
| 1 | Disclosure example | Passed |
| 2 | Disclosure example | Excellent |
| 3 | Disclosure example | Passed |
| 4 | Disclosure example | Passed |
| 5 | Disclosure example | Excellent |
| 6 | Disclosure example | Passed |
| 7 | Disclosure example | Excellent |
| 8 | Disclosure example | Passed |
| 9 | Disclosure example | Excellent |
| 10 | Disclosure example | Excellent |
| 11 | Disclosure example | Excellent |
| 12 | Disclosure example | Passed |
| 13 | Disclosure example | Passed |

(continued)

| No. | Classification | Toughness in low-temperature |
|-----|----------------|------------------------------|
| 14 | Disclosure example | Excellent |
| 15 | Disclosure example | Excellent |
| 16 | Disclosure example | Passed |
| 17 | Disclosure example | Passed |
| A1 | Comparative example | Failed |
| A2 | Comparative example | Failed |
| A3 | Comparative example | Failed |
| A4 | Comparative example | Failed |
| A5 | Comparative example | Failed |

It can be seen that the weld metal of the disclosure examples have high toughness in low-temperature.

However, comparative examples did not satisfy any of the requirements specified in the disclosure, and therefore failed in the toughness in low-temperature.

**Claims**

1. A weld metal having a chemical component consisting of, in % by mass with respect to a total mass of the weld metal,

C: from 0.030% to 1.000%,
Si: from 0.03% to 0.50%,
Mn: from 4.1% to 30.0%,
P: from 0% to 0.050%,
S: from 0% to 0.050%,
Cu: from 0% to 5.0%,
Ni: from 1.0% to 30.0%,
Cr: from 0% to 20.0%,
Mo: from 0% to 10.0%,
Nb: from 0% to 1.000%,
V: from 0% to 1.00%,
Co: from 0% to 1.00%,
Pb: from 0% to 1.00%,
Sn: from 0% to 1.00%,
W: from 0% to 20.0%,
Mg: from 0% to 5.0%,
Al: from 0% to 0.100%,
Ca: from 0% to 5.0%,
Ti: from 0% to 0.100%,
B: from 0% to 0.5000%,
REM: from 0% to 0.500%,
Zr: from 0% to 0.500%,
N: from 0% to 0.5000%,
O: from 0.0010% to 0.1500%, and
balance: Fe and impurities,
wherein:

a total (Mn + Ni) of a content of the Mn and a content of the Ni is 5.0% or more, and
a total (Nb + Ti + V + Al) of a content of the Nb, a content of the Ti, a content of the V, and a content of the Al is 0.005% or more.

2. The weld metal according to claim 1, wherein a total (Mn + Ni + Cr) of the content of the Mn, the content of the Ni, and a

22

content of the Cr is 15.0% or more.

3. The weld metal according to claim 1 or 2, wherein an fcc ratio obtained by a magnetic induction method is 70% or more.

4. The weld metal according to any one of claims 1 to 3, wherein a mass ratio (Ni/Mn) of the content of the Mn and the content of the Ni is 0.10 or more.

5. The weld metal according to claim 4, wherein the mass ratio (Ni/Mn) is 1.00 or more.

6. The weld metal according to any one of claims 1 to 5, wherein the content of the Ti is Ti: from 0.003% to 0.100%.

7. The weld metal according to any one of claims 1 to 6, wherein a content of the C is C: from 0.110% to 1.000%.

8. A weld joint comprising the weld metal according to any one of claims 1 to 7.

9. A weld structural object comprising the weld joint according to claim 8.

## INTERNATIONAL SEARCH REPORT

| International application No. |
| --- |
| **PCT/JP2022/036866** |

| A. | CLASSIFICATION OF SUBJECT MATTER |
| --- | --- |

**B23K 35/30**(2006.01)i
FI:   B23K35/30 320C; B23K35/30 330C

According to International Patent Classification (IPC) or to both national classification and IPC

| B. | FIELDS SEARCHED |
| --- | --- |

Minimum documentation searched (classification system followed by classification symbols)

B23K35/30; C22C38/00-38/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022/113473 A1 (JFE STEEL CORP.) 02 June 2022 (2022-06-02) | 1-4, 6-9 |
|   | claims, paragraph [0058], table 3 | |
| A | | 5 |
| X | WO 2022/186097 A1 (JFE STEEL CORP.) 09 September 2022 (2022-09-09) | 1-4, 6-9 |
|   | claims, paragraph [0076], table 3 | |
| A | | 5 |
| X | WO 2022/186096 A1 (JFE STEEL CORP.) 09 September 2022 (2022-09-09) | 1-4, 6-9 |
|   | claims, paragraph [0082], table 4 | |
| A | | 5 |
| X | WO 2022/054492 A1 (JFE STEEL CORP.) 17 March 2022 (2022-03-17) | 1-4, 6-9 |
|   | claims, paragraphs [0054]-[0056], table 3 | |
| A | | 5 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2022** | **13 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2022/036866** |

### C. DOCUMENTS CONSIDERED TO BE RELEVANT

| Category* | Citation of document, with indication, where appropriate, of the relevant passages | Relevant to claim No. |
| --- | --- | --- |
| X | JP 2017-502842 A (POSCO) 26 January 2017 (2017-01-26)<br>claims, tables 1-3 | 1-4, 6-9 |
| A | | 5 |
| X | JP 2022-89304 A (NIPPON STEEL STAINLESS STEEL CORP.) 16 June 2022 (2022-06-16)<br>claims, paragraphs [0077], [0080], tables 1, 3 | 1-9 |
| A | JP 55-7114 B2 (SHIN NIPPON SEITETSU KK) 22 February 1980 (1980-02-22)<br>claims, table 1 | 1-9 |
| A | JP 9-99391 A (THE JAPAN STEEL WORKS LTD.) 15 April 1997 (1997-04-15)<br>claims, paragraph [0014], table 2 | 1-9 |
| A | JP 2022-516181 A (NANJING IRON & STEEL CO., LTD.) 24 February 2022 (2022-02-24)<br>claims | 1-9 |
| A | JP 42-6647 B1 (YAWATA WELDING ELECTRODE CO., LTD.) 17 March 1967 (1967-03-17)<br>claim, table | 1-9 |

Form PCT/ISA/210 (second sheet) (January 2015)

## INTERNATIONAL SEARCH REPORT
### Information on patent family members

International application No.

**PCT/JP2022/036866**

| Patent document cited in search report | | | Publication date (day/month/year) | Patent family member(s) | | | Publication date (day/month/year) |
|---|---|---|---|---|---|---|---|
| WO | 2022/113473 | A1 | 02 June 2022 | JP | 7029034 | B1 | |
| WO | 2022/186097 | A1 | 09 September 2022 | (Family: none) | | | |
| WO | 2022/186096 | A1 | 09 September 2022 | (Family: none) | | | |
| WO | 2022/054492 | A1 | 17 March 2022 | (Family: none) | | | |
| JP | 2017-502842 | A | 26 January 2017 | EP | 3078447 | A1 | |
| | | | | claims, tables 1-3 | | | |
| | | | | US | 2016/0271739 | A1 | |
| | | | | CN | 105813799 | A | |
| | | | | WO | 2015/083878 | A1 | |
| JP | 2022-89304 | A | 16 June 2022 | (Family: none) | | | |
| JP | 55-7114 | B2 | 22 February 1980 | (Family: none) | | | |
| JP | 9-99391 | A | 15 April 1997 | (Family: none) | | | |
| JP | 2022-516181 | A | 24 February 2022 | EP | 3892416 | A1 | |
| | | | | claims | | | |
| | | | | WO | 2020/140379 | A1 | |
| | | | | CN | 109623198 | A | |
| JP | 42-6647 | B1 | 17 March 1967 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008246507 A